# EUROPÄISCHE PATENTSCHRIFT

(11) **EP 0 618 091 B1**
(45) Veröffentlichungstag und Bekanntmachung des Hinweises auf die Patenterteilung: **30.07.1997**
(21) Anmeldenummer: 94890059.2
(22) Anmeldetag: 21.03.1994
(51) Int. Cl.: B60C 11/12

(54) **Fahrzeugreifen**
Vehicle tyre
Bandage pneumatique pour véhicule

(30) Priorität: 01.04.1993 AT 660/93
(43) Veröffentlichungstag der Anmeldung: 05.10.1994
(73) Patentinhaber: Semperit Reifen Aktiengesellschaft, A-2514 Traiskirchen (AT)
(72) Erfinder: Liederer, Werner, Dr., A-2514 Traiskirchen (AT)
(74) Vertreter: Vinazzer, Edith, Dipl.-Ing.

(56) Entgegenhaltungen:
- WO-A-92/05969
- CH-A- 566 877
- FR-A- 763 308
- PATENT ABSTRACTS OF JAPAN vol. 13, no. 237 (M-833)5. Juni 1989 & JP-A-01 047 603 (TOYO TIRE&RUBBER CO. LTD.) 22. Februar 1989

## Beschreibung

Die vorliegende Erfindung betrifft einen insbesondere für den Wintereinsatz vorgesehenen Fahrzeugreifen mit einem Laufstreifenprofil, welches Profilblöcke aufweist, die jeweils mit einer Vielzahl vom Zentralbereich des jeweiligen Profilblockes strahlenförmig ausgehenden, bis zu den Profilblockkanten verlaufenden Feineinschnitten versehen sind.

Fahrzeugluftreifen mit Laufstreifenprofilen, deren Profilelemente mit einer Vielzahl von Feineinschnitten versehen sind, haben sich in den letzten Jahren insbesondere im Einsatz unter winterlichen Fahrbedingungen, entweder auf schneeigem oder eisigem Untergrund, sehr gut bewährt. Ein derartiger Fahrzeugreifen ist beispielsweise aus der AT-B 390.915 bekannt. Das Laufstreifenprofil dieses Fahrzeugluftreifens besitzt eine entlang der Mittelumfangslinie des Profiles umlaufende Profilrippe sowie seitlich dieser Rippe je zwei sich aus in Umfangsrichtung aneinandergereihten Profilblöcken zusammensetzende Blockreihen. Sowohl die Mittelrippe als auch die Profilblöcke in den Blockreihen sind jeweils mit einer Anzahl von über die Blockbreite bzw. die Rippenbreite durchgehend verlaufenden Feineinschnitten versehen. Diese Feineinschnitte verlaufen im wesentlichen parallel zueinander und sind auch im wesentlichen voneinander gleich beabstandet. Die Feineinschnitte sind ferner in Axialrichtung orientiert, derart, daß sie über einen Großteil ihrer Länge einen Winkel von ca. 30° mit der Axialrichtung einschließen. Reifen mit einem derartigen Laufstreifenprofil haben im allgemeinen gute Griffeigenschaften. Die ausgeprägte Ausrichtung der Feineinschnitte in Axialrichtung bewirkt jedoch, daß die Profilblöcke in Umfangsrichtung eine relativ niedrige Biegesteifigkeit, in Querrichtung jedoch eine relativ hohe Biegesteifigkeit aufweisen, was die Übertragung von Antriebs- und Bremskräften sowie das Fahrverhalten, insbesondere beim Kurvenfahren, beeinträchtigt.

Ein Fahrzeugreifen mit einem Laufstreifenprofil gemäß dem Oberbegriff des Anspruches 1 ist aus der JP-A 1 047 603 bekannt. Dabei ist hier vorgesehen, daß die Feineinschnitte jeweils von einer zentralen Vertiefung im Block ausgehen und entweder in Profilquerrichtung verlaufen oder zumindest einen Abschnitt besitzen, der in Profilquerrichtung verläuft und mit welchem die Feineinschnitte zu den Blockkanten verlaufen und in Nuten münden. Die zentrale Vertiefung besitzt eine Tiefe, die der Tiefe der Feineinschnitte entspricht, wobei deren Tiefe mindestens 50 % der generessen Profiltiefe gewählt wird. Die Ausgestaltung kommt einem Durchschneiden und Gliedern des Blocks in eine größere Anzahl von Blockteilen gleich, macht somit den Block weich, beweglich und instabil, was insbesondere für das Abriebsverhalten von Nachteil ist und Rißbildungen verursachen kann.

Die Erfindung hat sich daher die Aufgabe gestellt, einen Fahrzeugluftreifen der eingangs genannten Art so zu verbessern, daß die Profilblöcke bei weiterhin guten Griffeigenschaften eine hohe Biegesteifigkeit, sowohl in Umfangs- als auch in Querrichtung, aufweisen, wobei auch eine Beeinflussung der Biegesteifigkeit in der einen oder der anderen Richtung möglich sein soll.

Gelöst wird die gestellte Aufgabe erfindungsgemäß dadurch, daß der Zentralbereich massiv und somit von jeglichen Profilierungen frei ist, wobei zumindest zwei der Feineinschnitte vom Zentralbereich in entgegengesetzte Richtungen ausgehend zumindest im wesentlichen in Umfangsrichtung verlaufen, und wobei jeder der Feineinschnitte über seine gesamte Länge seine grundsätzliche Erstreckungsrichtung zumindest im wesentlichen beibehält.

Durch die strahlenförmige Anordnung der Feineinschnitte im Profilblock kann weiterhin eine günstige, relativ hohe Feineinschnittdichte geschaffen werden, wobei aber durch den massiven Zentralbereich dem Profilblock sowohl in Umfangsrichtung als auch in Axialrichtung eine relativ hohe Biegesteifigkeit verliehen werden kann. Die strahlenförmige Anordnung schafft zudem Griffkanten, die sowohl bei Geradeausfahrt als auch beim Kurvenfahren gleichermaßen wirken, was beim Einsatz von Reifen mit solchen Profilblöcken unter winterlichen Fahrbedingungen von großem Vorteil ist.

Nach einem weiteren Merkmal der Erfindung sind die Feineinschnitte als, in Draufsicht betrachtet, gerade, wellen- oder zick-fack-förmig verlaufende Feineinschnitte gestaltet.

Bei einer Ausführungsform der Erfindung weisen die strahlenförmig verlaufenden Feineinschnitte, in Draufsicht betrachtet, einen leicht gebogenen Verlauf auf, wobei insbesondere alle innerhalb eines Profilblockes verlaufenden Feineinschnitte in gleicher Richtung gebogen sind.

Es ist ferner günstig, wenn die Anzahl der strahlenförmig im Profilblock verlaufenden Feineinschnitte mindestens 4, insbesondere zwischen 8 und 12, beträgt.

Bei einer bevorzugten Ausführungsvariante der Erfindung sind jeweils zwei bezüglich des Zentralbereiches einander gegenüber liegende Feineinschnitte durch eine Gerade miteinander verbindbar sind, wobei diese Geraden einen gemeinsamen Schnittpunkt im Zentrum des Profilblockes haben.

Um möglichen Rißbildungen vorzubeugen ist es ferner günstig, wenn die Feineinschnittenden im Zentralbereich des Profilblockes einen Mindestabstand von zwei Millimeter aufweisen.

Zur Erzielung einer ausgewogenen Biegesteifigkeit des Profilblockes in allen Richtungen ist es ferner von Vorteil, wenn die strahlenförmig verlaufenden Feineinschnitte im Profilblock zumindest im wesentlichen gleichmäßig verteilt sind.

Bei einer weiteren bevorzugten Ausführungsform der Erfindung sind die strahlenförmig verlaufenden Feineinschnitte im Profilblock derart angeordnet und verteilt, daß die Summe sämtlicher in die Axialrichtung projezierbaren Längenkomponenten der Feineinschnitte mindestens dem 1,5-fachen, vorzugsweise dem 2 bis 3-fachen, der Summe sämtlicher in Umfangsrichtung projezierbaren Längenkomponenten entspricht. Solche Profilblöcke werden bevorzugt im Laufstreifenmittelbereich angeordnet, da dadurch dem Umstand Rechnung getragen werden kann, daß es für das Traktionsverhalten beim Beschleunigen und Bremsen günstig ist, wenn im Laufstreifenmittelbereich eine Querorientierung von Feineinschnitten überwiegt.

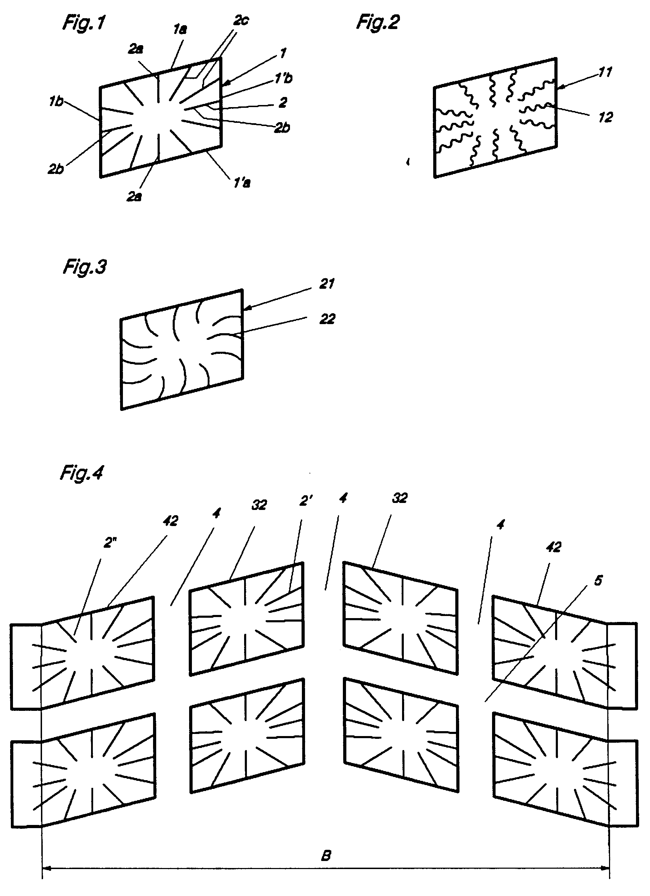

Weitere Merkmale, Vorteile und Einzelheiten der Erfindung werden nun anhand der Zeichnung, die mehrere Ausführungsbeispiele darstellt, näher beschrieben. Dabei zeigen Fig. 1, Fig. 2 und Fig. 3 Draufsichten auf einen einzelnen Profilblock mit unterschiedlichen Ausführungsformen der Erfindung und Fig. 4 schematisch die Draufsicht auf eine Teilabwicklung eines nach der Erfindung gestalteten Laufstreifenprofiles.

Fig. 1 zeigt schematisch die Draufsicht auf einen Profilblock, wie er in Laufstreifenprofilen von Fahrzeugluftreifen enthalten sein kann. Derartige Profilblöcke haben oft die in Fig. 1 gezeigte zumindest im wesentlichen parallelogrammförmige Grundgestalt, können jedoch auch etwa rhombenförmig oder rechteckförmig gestaltet sein. Die tatsächliche Blockform ist für die vorliegende Erfindung nebensächlich und die gezeigte parallelogrammförmige Grundgestalt dient lediglich illustrativen Zwecken. Der Profilblock 1 besitzt Blockkanten 1a, 1'a und 1b, 1'b, wobei die Blockkanten 1b, 1'b in der Umfangsrichtung des Laufstreifenprofiles ausgerichtet sind und die Profilblockkanten 1a, 1'a gegenüber der Axialrichtung des Reifens unter einm spitzen Winkel geneigt sind. Der bodenberührende Bereich eines Laufstreifenprofiles kann sich nun wie beispielsweise Fig. 4 zeigt, über den Reifenumfang aus vier Profilblockreihen zusammensetzen, wobei die Anzahl der Profilblöcke pro Blockreihe im allgemeinen zwischen 55 und 80 Blöcken gewählt wird. In Fig. 4 ist die Breite des Laufstreifens in der Bodenaufstandsfläche, die bei einem Reifen mit einer bestimmten Dimension unter normierten Bedingungen (Normluftdruck, Normlast, Reifen aufgebracht auf seiner Normfelge) ermittelt wird, mit B bezeichnet.

Wie Fig. 1 zeigt ist der Profilblock 1 mit einer Vielzahl von Lamellenfeineinschnitten 2 versehen, die von einem Zentralbereich innerhalb des Profilblockes 1, der in diesem Ausführungsbeispiel dem Bereich des Flächenschwerpunktes entspricht, strahlenförmig bis zu den Profilblockkanten 1a, 1'a, 1b, 1'b verlaufen. Dieser Zentralbereich ist sowohl bei dieser Ausführungsform als auch bei sämtlichen anderen Ausführungsformen von jeglichen weiteren Profilierungen frei und somit massiv ausgeführt. Dabei sind je zwei Lamellenfeineinschnitte 2a vorgesehen, die in Umfangsrichtung verlaufen, je zwei Lamellenfeineinschnitte 2b, die zumindest im wesentlichen parallel zu den Profilblockkanten 1a, 1'a verlaufen und je zwei Lamellenfeineinschnitte 2c, die jeweils im Blockquadranten zwischen einem in Umfangsrichtung verlaufenden Lamellenfeineinschnitt 2a und einem parallel zur Profilblockkante 1a, 1'a verlaufenden Lamellenfeineinschnitt 2b angeordnet sind. Dabei ist es günstig, wenn, wie dargestellt, keiner der Lamellenfeineinschnitte 2a, 2b, 2c in eine Profilblockecke hineinverläuft, da dies unerwünschte Rißbildungen in diesen Bereichen während des Laufstreifenabriebes im Betrieb des Reifens zur Folge haben könnte. Aus diesem Grund ist es auch günstig, wenn die Feineinschnittenden im Zentralbereich des Profilblockes 1 einen gewissen Mindestabstand voneinander haben, der zwei Millimeter nicht unterschreiten sollte. Je zwei dieser Einschnitte 2a, 2b, 2c können mit einer Linie verbunden werden, so daß sich diese Linien im Flächenschwerpunkt des Profilblockes 1 schneiden. Im in Fig. 1 dargestellten Ausführungsbeispiel ergibt die strahlenförmige Anordnung der Feineinschnitte bei 2a, 2b und 2c eine im wesentlichen gleichmäßige Verteilung der Feineinschnitte 2 im Profilblock 1.

Die Lamellenfeineinschnitte 2a, 2b und 2c sind, in Draufsicht betrachtet, geradlinig gestaltet und werden in einer Breite von 0,3 bis maximal 1 mm, insbesondere in einer Breite zwischen 0,4 und 0,6 mm, gewählt. Die Lamellenfeineinschnitte 2a, 2b, 2c weisen ferner eine Tiefe auf, die vorzugsweise mindestens 30 % der Dessintiefe entspricht. Die Feineinschnitte können jedoch stellenweise eine geringere Tiefe besitzen, was sich günstig auf die Profilblockstabilität auswirken kann.

Generell werden in einem Profilblock mindestens vier strahlenförmig verlaufende Feineinschnitte vorgesehen. Durch die Anordnung von insbesondere 8 bis 12 Feineinschnitten 2 im Profilblock 1 kann eine relativ hohe Feineinschnittdichte geschaffen werden, wobei der Profilblock 1 sowohl in Umfangsrichtung als auch in Axialrichtung eine relativ hohe Biegesteifigkeit aufweist. Gleichzeitig wird eine relativ hohe Anzahl von Griffkanten geschaffen, und zwar Griffkanten, die sowohl bei Geradeausfahrt als auch beim Kurvenfahren und seitlichen Lenkkräften wirken, was besonders für Reifen, die für den Einsatz unter winterlichen Fahrbedingungen geeignet sein sollen, von Vorteil ist.

Fig. 2 zeigt eine Ausführungsvariante eines Profilblockes 11, der von seiner Grundgestalt her dem Profilblock gemäß Fig. 1 entspricht, wobei die Lamellenfeineinschnitte 12 eine strahlenförmige Anordnung besitzen, die jener der Fig. 1 entspricht, im Gegensatz zu Fig. 1 sind die Feineinschnitte 12, in Draufsicht betrachtet, zick-zack- oder wellenförmig gestaltet.

Fig. 3 zeigt eine Ausführungsform, bei der die im Profilblock 21 strahlenförmig angeordneten Feineinschnitte 22 einen leicht gebogenen Verlauf aufweisen, wobei für alle Feineinschnitte 22 ein einheitlicher Verlauf gewählt wurde.

An dieser Stelle sei erwähnt, daß es aus Gründen der erwünschten Biegesteifigkeit des Profilblockes günstig sein kann, das Ausgangszentrum der strahlenförmig verlaufenden Feineinschnitte nicht im Flächenschwerpunktsbereich des Profilblockes anzuordnen sondern gegenüber diesem in Profilquerrichtung und/oder in Profilumfangsrichtung zu versetzen.

Fig. 4 zeigt eine mögliche Ausgestaltung eines Laufstreifenprofiles mit Blöcken mit strahlenförmig angeordneten Feineinschnitten. In der dargestellten Ausführungsform ist das Laufstreifenprofil als sogenanntes gepfeiltes bzw. drehrichtungsgebundenes Profil gestaltet und setzt sich aus vier Blockreihen mit jeweils zumindest im wesentlichen parallelogrammförmigen Profilblöcken 32, 42 zusammen, durch deren Anordnung drei gerade und in Reifenumfangsrichtung verlaufende Umfangsnuten 4 und, über die Laufflächenbreite betrachtet, im wesentlichen entlang eines V's verlaufende seitliche Rillen 5 gebildet werden. Die beiden im Laufflächenmittelbereich verlaufenden Profilblockreihen besitzen Einzelblöcke 32 mit strahlenförmig angeordneten Lamellenfeineinschnitten 2', die eine bestimmte Anordnung bzw. Verteilung im Profilblock 32 besitzen. Wie im Ausführungsbeispiel gemäß Fig. 1 besitzen einige der Lamellenfeineinschnitte 2' sowohl eine in die Axialrichtung als auch eine in die Umfangsrichtung projezierbare Komponente. Die Anordnung der Feineinschnitte 2' in diesen Profilblöcken 32 ist nun so getroffen, daß die Summe sämtlicher in Axialrichtung projezierbaren Längenkomponenten größer ist als die Summe sämtlicher in Umfangsrichtung projezierten Längen. Bevorzugt beträgt die Summe sämtlicher in Axialrichtung projezierbaren Längenkomponenten der Feineinschnitte 2' mindestens das 1,5-fache der Summe sämtlicher in Umfangsrichtung projezierbaren Längenkomponenten, vorzugsweise das 2 bis 3 fache. Dadurch kann dem Umstand Rechnung getragen werden, daß es für das Traktionsverhalten beim Beschleunigen und Bremsen günstig ist, wenn im Laufstreifenmittelbereich eine Querorientierung von Feineinschnitten überwiegt.

In den beiden Schulterblockreihen sind die Profilblöcke 42 mit Feineinschnitten 2'' versehen, deren Anordnung jenen entspricht, die im Profilblock gemäß Fig. 1 dargestellt sind. Die Schulterblöcke besitzen demnach eine ausgewogene Stabilität was sich günstig auf die Handlingseigenschaften, beispielsweise auf das Lenkverhalten beim Kurvenfahren, auswirkt. Auch hier kann durch gezielte Anordnung und Längenwahl der Feineinschnitte eine weitere Beeinflussung der Blockbiegesteifigkeit erfolgen.

Es wird darauf verwiesen, daß die vorliegende Erfindung auf die dargestellten Ausführungsbeispiele nicht eingeschränkt ist. So ist es insbesondere möglich, die Erfindung auch bei Laufflächenprofilen einzusetzen, wo Blockreihen mit Laufstreifenbändern kombiniert werden und unabhängig davon, ob dadurch ein laufrichtungsgebundenes oder ein herkömmliches Profil gebildet wird. Bezüglich der Anordnung, der Anzahl und der Längserstreckung der Feineinschnitte stehen dem Konstrukteur eine Vielzahl von Möglichkeiten offen, so daß verschiedene Laufstreifeneigenschaften, wie beispielsweise die Profilstabilität und das Griffverhalten im erwünschten Ausmaß beeinflußt werden können. Es ist selbstverständlich bei ein und demselben Laufstreifenprofil auch eine Kombination von Profilelementen mit nach der Erfindung gestalteten strahlenförmig verlaufenden Feineinschnitten und mit Profilelementen, die herkömmliche Feineinschnittgestaltungen aufweisen, möglich.

## Patentansprüche

1. Fahrzeugreifen, insbesondere für den Einsatz unter winterlichen Fahrbedingungen, mit einem Laufstreifenprofil, welches Profilblöcke (1, 11, 21, 32, 42) aufweist, die jeweils mit einer Vielzahl vom Zentralbereich des jeweiligen Profilblockes (1, 11, 21, 32, 42) strahlenförmig ausgehenden, bis zu den Profilblockkanten verlaufenden Feineinschnitten (2,2',2''; 12, 22) versehen sind, dadurch gekennzeichnet, daß der Zentralbereich massiv und somit von jeglichen Profilierungen frei ist, wobei zumindest zwei der Feineinschnitte (2a) vom Zentralbereich in entgegengesetzte Richtungen ausgehend zumindest im wesentlichen in Umfangsrichtung verlaufen, und wobei jeder der Feineinschnitte (2,2',2''; 12, 22) über seine gesamte Länge seine grundsätzliche Erstreckungsrichtung zumindest im wesentlichen beibehält.

2. Fahrzeugreifen nach Anspruch 1, dadurch gekennzeichnet, daß die Feineinschnitte (2, 2', 2'', 12, 22) als, in Draufsicht betrachtet, gerade, wellen- oder zick-fack-förmig verlaufende Feineinschnitte gestaltet sind.

3. Fahrzeugreifen nach Anspruch 1 oder Anspruch 2, dadurch gekennzeichnet, daß die strahlenförmig verlaufenden Feineinschnitte (22), in Draufsicht betrachtet, einen leicht gebogenen Verlauf aufweisen, wobei insbesondere alle innerhalb eines Profilblockes (21) verlaufenden Feineinschnitte (22) in gleicher Richtung gebogen sind.

4. Fahrzeugreifen nach einem der Ansprüche 1 bis 3, dadurch gekennzeichnet, daß die Anzahl der strahlenförmig im Profilblock (1,11,21,32,42) verlaufenden Feineinschnitte (2, 2', 2'', 12, 22) mindestens 4, insbesondere zwischen 8 und 12, beträgt.

5. Fahrzeugreifen nach einem der Ansprüche 1 bis 4, dadurch gekennzeichnet, daß jeweils zwei bezüglich des Zentralbereiches einander gegenüber liegende Feineinschnitte (12) durch eine Gerade miteinander verbindbar sind, wobei diese Geraden einen gemeinsamen Schnittpunkt im Zentrum des Profilblockes (1) haben.

6. Fahrzeugreifen nach einem der Ansprüche 1 bis 5, dadurch gekennzeichnet, daß die Feineinschnittenden im Zentralbereich des Profilblockes (1, 11, 21, 32, 42) einen Mindestabstand von zwei Millimeter aufweisen.

7. Fahrzeugreifen nach einem der Ansprüche 1 bis 6, dadurch gekennzeichnet, daß die strahlenförmig verlaufenden Feineinschnitte (2, 12, 22) im Profilblock (1, 11, 21) zumindest im wesentlichen gleichmäßig verteilt sind.

8. Fahrzeugreifen nach einem der Ansprüche 1 bis 7, dadurch gekennzeichnet, daß die strahlenförmig verlaufenden Feineinschnitte (2') im Profilblock (32) derart angeordnet und verteilt sind, daß die Summe sämtlicher in die Axialrichtung projezierbaren Längenkomponenten der Feineinschnitte (2') mindestens dem 1,5-fachen, vorzugsweise dem 2 bis 3-fachen, der Summe sämtlicher in Umfangsrichtung projezierbaren Längenkomponenten entspricht.

## Claims

1. Vehicle tyre, more especially for use in wintry travel conditions, having a tread strip profile which includes profile blocks (1, 11, 21, 32, 42) which are each provided with a plurality of fine incisions (2, 2', 2''; 12, 22) which extend radially from the central region of the respective profile block (1, 11, 21, 32, 42) to the profile block edges, characterised in that the central region is solid and is, in consequence, free of any profilings, at least two of the fine incisions (2a) extending at least substantially in the circumferential direction from the central region in opposite directions, and each of the fine incisions (2, 2', 2''; 12, 22) at least substantially retaining its basic extension direction over its entire length.

2. Vehicle tyre according to claim 1, characterised in that the fine incisions (2, 2', 2''; 12, 22) are configured as rectilinear, undulatory or zigzag-shaped fine incisions when viewed from above.

3. Vehicle tyre according to claim 1 or claim 2, characterised in that, when viewed from above, the radially extending fine incisions (22) have a slightly curved configuration, more especially all of the fine incisions (22), which extend internally of a profile block (21), being curved in the same direction.

4. Vehicle tyre according to one of claims 1 to 3, characterised in that the number of the fine incisions (2, 2', 2''; 12, 22), which extend radially in the profile block (1, 11, 21, 32, 42), is at least 4, more especially between 8 and 12.

5. Vehicle tyre according to one of claims 1 to 4, characterised in that two fine incisions (12) at a time, which lie opposite each other in respect of the central region, are interconnectable by a straight line, these straight lines having a common intersection in the centre of the profile block (1).

6. Vehicle tyre according to one of claims 1 to 5, characterised in that the fine incision ends in the central region of the profile block (1, 11, 21, 32, 42) have a minimum spacing of two millimetres therebetween.

7. Vehicle tyre according to one of claims 1 to 6, characterised in that the radially extending fine incisions (2, 12, 22) in the profile block (1, 11, 21) are distributed at least substantially uniformly.

8. Vehicle tyre according to one of claims 1 to 7, characterised in that the radially extending fine incisions (2') are disposed and distributed in the profile block (32) in such a manner that the sum of all of the length components of the fine incisions (2') which are projectable in the axial direction corresponds to at least 1.5-times, preferably 2- to 3-times, the sum of all of the length components which are projectable in the circumferential direction.

## Revendications

1. Bandage pneumatique pour véhicule, notamment destiné à l'utilisation dans des conditions de déplacement hivernales, comportant un profil de bande de roulement muni de blocs profilés (1, 11, 21, 32, 42) qui présentent, à chaque fois, un grand nombre de minces entailles (2, 2', 2'' ; 12, 22) partant de la zone centrale du bloc profilé considéré (1, 11, 21, 32, 42), sous la forme de rayons, et s'étendant jusqu'aux arêtes du bloc profilé, caractérisé par le fait que la zone centrale est massive, et est par conséquent dépourvue de quelconques profilages, au moins deux parmi les minces entailles (2a), partant de la zone centrale dans des directions opposées, s'étendant au moins pour l'essentiel dans le sens périphérique, et chacune des minces entailles (2, 2', 2'' ; 12, 22) conservant au moins pour l'essentiel, sur toute sa longueur, sa direction d'étendue fondamentale.

2. Bandage pneumatique pour véhicule, selon la revendication 1, caractérisé par le fait que les minces entailles (2, 2', 2'', 12, 22) sont réalisées sous la forme de minces entailles présentant, observées par-dessus, une allure rectiligne, ondulée ou en zigzag.

3. Bandage pneumatique pour véhicule, selon la revendication 1 ou la revendication 2, caractérisé par le fait que les minces entailles (22) s'étendant sous la forme de rayons présentent une allure légèrement curviligne observées par-dessus, notamment toutes les minces entailles (22), s'étendant à l'intérieur d'un bloc profilé (21), étant courbées dans une même direction.

4. Bandage pneumatique pour véhicule, selon l'une des revendications 1 à 3, caractérisé par le fait que le nombre des minces entailles (2, 2', 2'', 12, 22) s'étendant sous la forme de rayons, dans le bloc profilé (1, 11, 21, 32, 42), est d'au moins 4 et est notamment compris entre 8 et 12.

5. Bandage pneumatique pour véhicule, selon l'une des revendications 1 à 4, caractérisé par le fait que deux minces entailles (12) considérées, situées en vis-à-vis mutuel par rapport à la zone centrale, peuvent être reliées l'une à l'autre par l'intermédiaire d'une ligne droite, ces lignes droites présentant un point commun d'intersection au centre du bloc profilé (1).

6. Bandage pneumatique pour véhicule, selon l'une des revendications 1 à 5, caractérisé par le fait que les extrémités des minces entailles présentent, dans la zone centrale du bloc profilé (1, 11, 21, 32, 42), un espacement minimal de deux millimètres.

7. Bandage pneumatique pour véhicule, selon l'une des revendications 1 à 6, caractérisé par le fait que les minces entailles (2, 12, 22), s'étendant sous la forme de rayons, sont réparties d'une manière au moins pour l'essentiel uniforme dans le bloc profilé (1, 11, 21).

8. Bandage pneumatique pour véhicule, selon l'une des revendications 1 à 7, caractérisé par le fait que les minces entailles (2') s'étendant sous la forme de rayons sont disposées et réparties, dans le bloc profilé (32), de façon telle que la somme de toutes les composantes de longueur desdites minces entailles (2'), projetables dans le sens axial, corresponde à au moins 1,5 fois, de préférence entre 2 et 3 fois la somme de toutes les composantes de longueur projetables dans le sens périphérique.
